# EUROPEAN PATENT SPECIFICATION

(11) **EP 4 238 710 B1**
(45) Date of publication and mention of the grant of the patent: **04.12.2024**
(21) Application number: 22213226.8
(22) Date of filing: 13.12.2022
(51) Int. Cl.: B25J 5/00, B25J 9/04, B25J 9/06

(54) **ROBOTIC SYSTEM FOR ALUMINUM FURNACE OPERATIONS**
ROBOTERSYSTEM FÜR ALUMINIUMOFENOPERATIONEN
SYSTÈME ROBOTIQUE POUR OPÉRATIONS DE FOUR À ALUMINIUM

(30) Priority: 02.03.2022 US 202263315819 P
(43) Date of publication of application: 06.09.2023
(73) Proprietor: Dynamic Concept, Saguenay, Québec G7X 0J7 (CA)
(72) Inventor: CÔTÉ, Patrice, Jonquière, G7X 0H9 (CA); DESMEULES, Jean-François, Jonquière, G7S 2L4 (CA); MENARD, Cedrik, Saguenay, G7H 7N4 (CA)
(74) Representative: Jacob, Reuben Ellis

(56) References cited:
- WO-A1-2021/086745
- US-A- 4 568 238
- US-A- 5 634 377
- US-B2- 10 751 888

## Description

### BACKGROUND

### (a) Field

The subject matter disclosed generally relates to systems for operating furnaces. More particularly, the subject matter disclosed relates to systems for performing furnace tending processes.

### (b) Related Prior Art

Traditionally, in conventional processes for metal castings, operators must operate with furnaces, molten metal, and molds, all of which are kept is high temperatures to prevent premature solidification of the molten metal, which results in an excessively difficult environment for the operators.

Furnace tending is one of the least automated activities in cast houses. The size of the furnaces, their various geometries, the temperatures inside the furnaces, as well as the general conditions of the immediate environment of the furnaces, represent a significant challenge for the automation of tending operations. Nowadays, the general practice for furnaces ranging from 10-20 metric tons up to 120 metric tons is to have charging done using vehicles or dedicated charging machines, and other activities such as mixing using electromagnetic stirrers or large vehicles fitted with long and cumbersome metallic attachments.

Skimming and cleaning are other activities carried out using wheel-based vehicles or dedicated rail mounted equipment.

In any case, fully automated movements are difficult, if not impossible, to achieve when using vehicles, which leads to many problems such as vehicle and furnace maintenance costs due to harsh operating conditions.

Equipment manufacturers are beginning to offer equipment that include assistance to the operator but most tasks, especially furnace cleaning, still rely on an operator. We worked on the problem with an entirely automated (robotised) vision which we consider a novel approach.

### Manpower availability

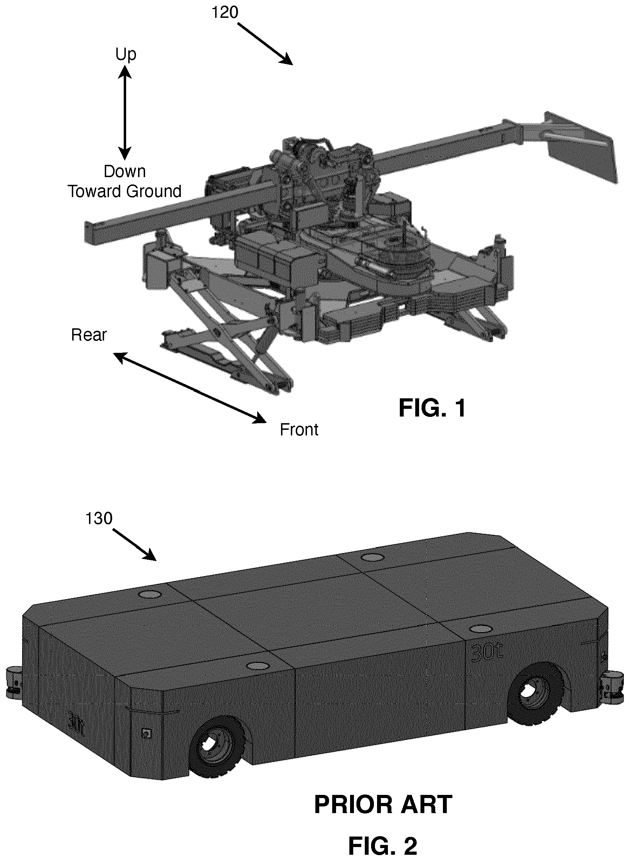

Demographics in the Western world make it increasingly difficult to recruit and retain manpower. The inverted age pyramid leads to more people leaving for retirement than young people entering the market. Consequently, recruiting personnel - especially for physically demanding tasks, even with high-end salaries - has become increasingly difficult for aluminum cast houses. This human resource problem puts pressure on operation and technical teams, which increasingly must rely on automation. The low hanging fruits having been harvested already, it is now time to look at more challenging applications, such as furnace tending. This is also one of the driving forces for the implementation of Automated Guided Vehicles (AGVs, not depicted) and Autonomous Mobile Robots (AMRs 130, Fig. 2) for routine operations such as anode and metal transportation within the plant.

### Other driving forces behind automation

One such driving force is the generally well-known fact that the variability of a process is reduced through automation, thus increasing quality control; thus, automating furnace operations can help better control residual dross.

There is also economical pressure. There is pressure over North American and European plants to reduce costs to compete with plants in the Middle East and China where human costs are lower. Robotization helps reduce production costs by improving productivity and consistency of operations as well as maintenance costs for furnace tending equipment and furnace refractories.

Another important driving force is safety. The use of a diesel-powered vehicle with hydraulics in front of a furnace results in exposed material and staff to molten metal projections if the preparations and/or processes are not ideally performed. Although modern furnace tending equipment integrates excellent worker protection, there is always remaining risks of fire in the event of metal projections or spillage.

Another aspect resides in workspace management. The interaction between vehicles and pedestrians is also one important risk factor in cast houses. Efforts are made to prevent pedestrians and vehicles from passing each other but avoiding all risks of interactions remains impossible.

### Existing technologies for furnace tending, and their limitations

### Vehicles

The simplest equipment available nowadays for furnace tending is a specialized and extremely flexible vehicle used to perform many tasks such as charging, alloying, mixing, skimming, and cleaning the furnace. However, the downside in using such vehicles is that, in all cases, they require skilled operators, therefore with the limitations that this implies - such as work force formation, workforce fatigue, schedules, breaks, meals, intershift delays - which affect both global quality of the work done and reduce both operating windows. In addition, skill variability between operators, including skill reduction due to fatigue, also reduces the efficiency of operations and increases maintenance costs. Tending operations are hard on trucks and increase fleet upkeep costs.

For illustration, when using such a vehicle, it is very difficult for an operator to accurately control the depth of the skimming tool, or the force to be applied against the lining during cleaning. The long tool attachments that are used with these vehicles can easily hit and damage the refractory lining and the roof.

Finally, not the least, diesel powered vehicles pose a health risk due to the possible build-up of carbon monoxide and exhaust gases if the area is not properly ventilated. Efforts are being made to electrify these vehicles, but they are still in the early phases of implementation.

### Specialized machines

Specialized machines, such as those used for charging and skimming, are very efficient by design to their specific functions. Most of the time, however, such use of such specialized machines is limited where furnaces are features a specific alignment, so that rails can be used to displace the specialized machines. Moreover, furnaces, to be serviceable with the same specialized equipment, must be identical or at least very similar. Accordingly, even with the use of specialized machines, more specialized operations such as furnace cleaning still require human intervention with more specialized tooling (usually involving the need for a vehicle).

In addition, the specialized systems available nowadays require a power cable to power these machines. Such a cable must be permanently connected and to provide no interference with operations, requiring a trench route requiring civil works and mechanisms for closing trenches, limiting movements, and complicating co-activity with other vehicles and operations. Such civil work further limits evolution of the working place over time.

### Common limitation: the human factor

The common limitation regarding existing technologies is the human factor. Since furnace operations are in the critical path for delivering metal to the casting equipment, cast house managers wish to avoid anything that can disrupt the flow of metal, including delays in furnace operations. When operators perform operations that are in the critical path, this adds pressure to all cast house operations.

In summary, manpower availability is becoming an issue in most of the Western world, while furnace tending operations still largely depend on the skills of the operators. This is an important factor motivating the implementation of automated furnace tending operations. However, the various challenges posed by the furnace geometry and the cast house configuration make it an opportunity for robotization compared to conventional automation.

### Robotization of furnace tending : challenges

While robots are becoming more and more common in some industries, they are still very rare in large cast houses. They are almost exclusively used in ingot stacking, and in ingot, sow, or crucible skimming. Reasons that explain that situation:

### Safety

Safety is one of the first concerns when implementing robotic solutions. There are already safety standards that cover commercial robots, the latter including many programmable safeguards in their firmware that comply with existing standards. International standards exist such as ISO 10218-1:2011 - Robots and robotic devices - Safety requirements for industrial robots - Part 1: Robots and Part 2: Robot systems and integration. Most countries also developed specific standards such as Canadian standard CSA Z434, Industrial Robots and Robot Systems. This standard is the Canadian National Adoption of ISO 10218-1,2.

In accordance with these standards, conventional robot cells (aka working environments) are completely enclosed with interlocks preventing human/robot interaction. Such solution is almost impossible to apply when it comes to performing furnace tending operations. In cast houses, robots must operate in an area where other operations can be carried out simultaneously.

### High temperatures and environmental conditions

The high temperatures inside furnaces and the radiant heat from the open door require special attention. Thermal protection must be integrated, but it is also necessary, after the operation, to manage the heat of the tool that is used inside the furnace. Although already a challenge for human operated equipment, it is one remaining with robotized solutions.

In many cast houses, the environmental conditions also expose machinery to dust, gases, molten metal splashes and the like. This is far from the conditions inside a vehicle assembly line or the like for which most robots are designed. These harsh conditions pose a limitation to the types of sensors and tools that can be used. Some robots are available with special "foundry ready" preparation, but the latter are mostly used in die casting or similar operations. When larger amounts of molten metal are processed (for example, sow or crucible skimming). These robots are covered with special protective "clothing" that protects the robots from radiant heat. Sometimes forced cooling of the robot is also required.

### Shape and size of the furnace (including variation in shape)

The opening of any typical reverb furnace is a wide and shallow aperture. Most robots available on the market are designed to operate in a somewhat spherical volume, and the arms, because of their shape, occupy a large portion of this volume when simulating operations.

The area of the metal bath inside the furnace also poses a challenge, as it requires sweeping movements, inside the furnace, which far exceed the capacity of existing robots.

Finally, the shape of the inside of the furnace is not identical from one furnace to another - and even over the life span of a given furnace, the shape of the refractory may change due to wear, thermal deformation of the shell, or residue buildup. This poses a challenge for the path of the cleaning tool the robot must be able to exert.

### Load types

Robots available nowadays are mainly designed for high velocity, low load applications. The limitations also include moments and inertia to be considered, which further reduces the available payload a robot may undergo. The highest loads available of such robots are in the order of 2300 kg. Although this seems a heavy lift, it is small compared to the weight and moment of inertia of a tool that must be able to reach the back wall of a 100 MT (Metric Ton) holding furnace.

In the field of furnace tending, high loads and low velocities are involved, which is in contradiction with the intended use of existing robots. The temperatures and the type of operations to be carried out in the furnace do not allow the design of lightweight tools that can be mounted on robots.

Given the aforementioned challenges, there was identified that no existing robotized solutions fulfill the requirements for furnace tending operations.

US patent no. 10,751,888 B2 pertaining to a MANIPULATOR APPARATUS FOR OPERATING ON ARTICLES, developed by ADVANCED INTELLIGENT SYSTEMS INC. The document describes a manipulator apparatus for operating on articles. The apparatus includes a column having a mounting portion for securing the manipulator to a base and an extensible portion that is moveable over an extension range with respect to the mounting portion in response to an actuation force provided by a column actuator. The apparatus also includes an arm mounted to the extensible portion of the column at an arm joint and rotatable about the arm joint in response to an actuation torque provided by an arm rotation actuator. The apparatus further includes an end effector operably configured to perform an operation on the articles, the end effector being mounted at an end effector joint disposed at an end of the arm distal to the arm joint, the end effector being rotatable about the end effector joint in response to an actuation torque provided by an end effector rotation actuator. The rotation of the end effector occurs within an end effector movement plane and the rotation of the arm occurs within an arm movement plane, the respective movement planes being substantially parallel to each other, and the extensible portion of the column is moveable in a direction normal to the respective movement planes and the extensible portion of the column causes the arm joint to be disposed to permit clearance for a full 360° rotation of the arm over at least a portion of the extension range of the extensible portion of the column to provide an operating range within which the end effector is able to move for operating on the articles.

Patent publication application no. WO 2021/086745 A1 pertaining to a WAFER HANDLING ROBOT WITH GRAVITATIONAL FIELD SENSOR, developed by LAM RES CORP. The document describes techniques and systems for automatically determining and correcting the levelness of a wafer handling robot end effector. The systems may use a tilt sensor or a gravitational field sensor which may be calibrated to the wafer handling robot. The output from the tilt sensor may be used to determine or estimate the tilt of an end effector of the wafer handling robot and to perform correctional positioning to reduce or eliminate the tilt, to automatically teach certain positions that have reduced tilt, to perform health checks on the robot, provide feedback to a user, etc.

US patent no. 5,634,377 A pertains to an ARTICULATED ROBOT, developed by SONY CORP. The document describes a robot that has a base shaft portion disposed on a base, a first arm attached in a rotatable state to the base shaft portion, and a second arm attached in a rotatable state to the first arm. Balance setting is performed so as to position the center of gravity of the second arm above the rotation shaft of the second arm. A housing to which the motor, whose driving power is transmitted to a rotation shaft of the second arm by a steel belt, and harmonic reduction gear for rotating the second arm are fixed, is supported in a rotatable state with respect to the first arm, the drive shaft of the motor being disposed substantially coaxial with a rotation shaft of the first arm. A support arm of the housing is supported in a rotatable and slidable state along the length direction of the first arm by a support member fixed to the base shaft portion. In adjusting the tension of the steel belt the housing is displaced by a setting bolt to change the gap between the rotation shaft of the second arm and the output shaft of the harmonic reduction gear.

US patent no. 4,568,238 A pertains to a HORIZONTAL MULTI-LINK TYPE ROBOT, developed by TOYODA MACHINE WORKS. The document describes a horizontal multi-link type robot has servomotors for rotating first and second arms, respectively. These servomotors are mounted to a first arm support shaft so as to be symmetrical with respect to this shaft. The first arm is mounted to the first arm support shaft so as to be rotatable in a horizontal plane. The second arm is mounted to a second arm support shaft, which extends parallel to the first arm support shaft and is rotatably held to the first arm. A tool holding shaft extends parallel to the second arm support shaft and is rotatably held to the second arm.

Accordingly, there is a need for systems, and particularly for robotic systems for automation of a foundry.

### SUMMARY

In some aspects, the techniques described herein relate to a stationary robotic system adapted for performing a furnace tending process, the stationary robotic system including: a platform movable between stations; an arm assembly rotatably mounted to the platform about a first axis, the arm assembly including a first arm rotatably mounted to the platform, and a second arm rotatably mounted to the first arm about a second axis distant to the first axis; and a tool driving assembly rotatably mounted to the second arm about a third axis distant to the second axis, the tool driving assembly being adapted to drive extension and operating angle of a tool relative to horizontal, wherein the robotic system provides a spatial range of base points for the tool with the stationary robotic system remaining stationary.

In some aspects, the techniques described herein relate to a robotic system including: a self-standing platform movable between stations; an articulated arm assembly rotatably mounted to the platform around a first axis, the articulated arm assembly including at least one joint flexible through a second axis, and a third axis farther to the first axis than the joint, with the first axis and the second axis being parallel to each other; a tool driving assembly rotatably mounted to the articulated arm about the third axis; powering assembly fixedly mounted to the articulated arm assembly, whereby the powering assembly is rotatable with the articulated arm assembly about the first axis; driving assemblies for driving a first movement of the articulated arm assembly relative to the first axis, driving a second movement of the articulated arm assembly relative to the second axis, driving a third movement of the tool driving assembly relative to the third axis and driving the tool driving assembly; wherein driving assemblies are connected to the powering assembly.

In some aspects, the techniques described herein relate to a robotic system, wherein the powering assembly includes a hydraulic powering pump.

In some aspects, the techniques described herein relate to a robotic system, wherein the articulated arm assembly is a SCARA arm assembly including arms rotabably mounted to each other via a slew bearing.

In some aspects, the techniques described herein relate to a robotic system, wherein the SCARA arm assembly includes a passageway extending through the arms and the slew bearing.

In some aspects, the techniques described herein relate to a robotic system, further including a power artery extending through the passageway, the power artery including a means for transmitting hydraulic power, a command cable and an electric power cable, wherein the power artery is connected to at least one of the driving assemblies.

In some aspects, the techniques described herein relate to a robotic system, wherein the tool driving assembly is rotatably mounted to the articulated arm assembly, the tool driving assembly driving a tool according to at least two degrees of freedom.

In some aspects, the techniques described herein relate to a robotic system, wherein the self-standing platform includes extendable legs, monitoring components designed to monitor stability of the platform, and driving components connected to the legs to controllably adapt extension of the legs to maintain stability of the platform.

In some aspects, the techniques described herein relate to a robotic system, wherein at least one of the driving assemblies includes a control valve, fed with hydraulic power, that is adapted to receive a target position command, a hydraulic actuator connected to the control valve, and a sensor designed to transmit a position signal changing with operation of the actuator to the control valve, wherein the control valve is adapted compare the target position command with the position signal, and to transmit hydraulic power to the hydraulic actuator accordingly.

In some aspects, the techniques described herein relate to a robotic system comprising a hydraulic powering pump consists in a variable displacement pump, with the robotic system further comprising a kidney loop, and a fix displacement pump operating in relation with the kidney loop.

In some aspects, the techniques described herein relate to a robotic system, wherein the powering assembly includes a fan adapted to cool down fluid circulating in the kidney loop.

In some aspects, the techniques described herein relate to a robotic system, wherein the powering assembly includes battery cells.

In some aspects, the techniques described herein relate to a robotic system, wherein the powering assembly is mounted to the articulated arm assembly distant to the third axis, whereby the powering assembly at least partially balancing dead load generated by the tool driving assembly.

In some aspects, the techniques described herein relate to a robotic system, wherein at least one of: the articulated arm assembly is adapted to flex over at least 270 degrees; and the articulated arm assembly is adapted to rotate relative to the platform over at least 270 degrees.

In some aspects, the techniques described herein relate to a robotic system, further including a controllable one-flow valve connected to a hydraulic actuator, wherein the controllable one-flow valve operates as a hydraulic brake for one of the driving assemblies.

In some aspects, the techniques described herein relate to a robotic system, further including a controller assembly and an imaging subsystem including an image capture component, wherein the robotic system includes an automation program adapted for autonomously operating based on at least an image captured by the imaging subsystem and the automation program.

In some aspects, the techniques described herein relate to a robotic system including: a platform movable between stations; an arm assembly rotatably mounted to the platform around a first axis, a tool driving assembly rotatably mounted to the articulated arm, with the tool driving assembly being rotatable about a tool axis distant from the first axis; a powering assembly fixedly mounted to the articulated arm, whereby the powering assembly is rotatable with the articulated arm about the first axis; at least one driving assembly including a control valve, an actuator and a sensor, the driving assembly being for driving one of a) a movement of the arm assembly relative to the platform; and b) a movement of the driving tool assembly relative to the arm assembly; powering artery including hydraulic tubing, electric cables and a command cable, the powering artery connecting the powering components to the driving assembly, with the command cable being adapted for transmitting a command signal to the control valve about a target position, the hydraulic tubing feeding the control valve with hydraulic power, and the electric cables electrically powering the control valve, wherein the control valve determines hydraulic power to feed the actuator with based on comparison of the target position with a feedback position signal generated by the sensor.

In some aspects, the techniques described herein relate to a robotic system including: a platform movable between stations; an arm assembly rotatably mounted to the platform through a first slew bearing, the arm assembly including a first arm rotatably mounted to the platform, and a second arm rotatably mounted to the first arm through a second slew bearing distant to the first slew bearing; and a tool driving assembly rotatably mounted to the first arm through a third slew bearing distant to the second slew bearing, the tool driving assembly being adapted to drive extension and operating angle of a tool relative to horizontal, wherein the robotic system provides a spatial range of base points for the tool with the stationary robotic system remaining stationary.

Features and advantages of the subject matter hereof will become more apparent considering the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Fig. 1 is a perspective view of a robotic system adapted to be moved by an Autonomous Mobile Robot (AMR), wherein components of the depicted robotic system are moved in positions such as the robotic system is in a compact configuration adapted for transport, in accordance with an embodiment;
Fig. 2 is a perspective view of an Autonomous Mobile Robot adapted to move the robotic system of Fig. 1 in accordance with an embodiment;
Fig. 3 is perspective view of a robotic system mounted to a railing system in accordance with an embodiment;
Fig 4 is a schematic of a robotic system with its platform lowered in accordance with an embodiment with identification of degrees of freedom;
Fig. 5 is a perspective view of a base of a robotic system with its platform raised in accordance with an embodiment;
Fig. 6 is a perspective view of a SCARA arm assembly in accordance with an embodiment;
Fig. 7 is a perspective view of a tool and of components of tool driving assembly in accordance with an embodiment;
Fig. 8 is a partial perspective view of the rear of a robotic system in accordance with an embodiment;
Fig. 9 is a partial side perspective view of the rear of a robotic system in accordance with an embodiment;
Fig. 10 is a partial rear perspective view of the rear of a robotic system in accordance with an embodiment;
Fig. 11 is a cross-section side elevation view of a portion of a robotic system in accordance with an embodiment;
Fig. 12 is a perspective elevated view of a portion of a first SCARA arm showing a passageway, a slew bearing, components of a power artery and a driving assembly;
Fig. 13 is a perspective elevated view of a tool translating mechanism with no tool mounted thereto in accordance with an embodiment;
Fig. 14 is a top plan view of the tool translating mechanism of Fig. 13 with a tool mounted thereto but without a driving chain;
Figs. 15 to19 are perspective views of a robotic system in accordance with an embodiment from an initial state when the robotic system is ready to trend the furnace to different stages during the furnace tending process;
Fig 20 is a schematic of a furnace and of an exemplary displacement path of the junction of the SCARA arm assembly and the tool driving assembly;
Fig. 21 is a schematic of a furnace and of an exemplary displacement path of the junction of the operating extremity of the tool; and
Fig. 22 is a schematic of the components of a robotic system in accordance with an embodiment with command connections depicted; and
Fig. 23 is a schematic of the components of a robotic system in accordance with an embodiment with power artery and power veins schematically depicted.

It will be noted that throughout the appended drawings, like features are identified by like reference numerals.

### DETAILED DESCRIPTION

The realizations will now be described more fully hereinafter with reference to the accompanying figures, in which realizations are illustrated. The foregoing may, however, be embodied in many different forms and should not be construed as limited to the illustrated realizations set forth herein.

With respect to the present description, references to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

Recitation of ranges of values and of values herein or on the drawings are not intended to be limiting, referring instead individually to any and all values falling within the range, unless otherwise indicated herein, and each separate value within such a range is incorporated into the specification as if it were individually recited herein. The words "about", "approximately", or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described realizations. The use of any and all examples, or exemplary language ("e.g.," "such as", or the like) provided herein, is intended merely to better illuminate the exemplary realizations, and does not pose a limitation on the scope of the realizations. No language in the specification should be construed as indicating any unclaimed element as essential to the practice of the realizations. The use of the term "substantially" is intended to mean "for the most part" or "essentially" depending on the context. It is to be construed as indicating that some deviation from the word it qualifies is acceptable as would be appreciated by one of ordinary skill in the art to operate satisfactorily for the intended purpose.

In the following description, it is understood that terms such as "first", "second", "top", "bottom", "above", "below", and the like, are words of convenience and are not to be construed as limiting terms.

The terms "top", "up", "upper", "bottom", "lower", "down", "vertical", "horizontal", "interior" and "exterior" and the like are intended to be construed in their normal meaning in relation with normal installation of the product, with indication of normal orientation of the robotic system being provided on Fig. 1.

It should further be noted that for purposes of this disclosure, the term "coupled" means the joining of two members directly or indirectly to one another. Such joining may be stationary in nature or movable in nature and/or such joining may allow for the flow of fluids, electricity, electrical signals, or other types of signals or communication between two members. Such joining may be achieved with the two members, or the two members and any additional intermediate members being integrally formed as a single unitary body with one another or with the two members or the two members and any additional intermediate members being attached to one another. Such joining may be permanent in nature or alternatively may be removable or releasable in nature.

In realizations, there are disclosed a robotic system and components of a robotic system. More precisely, there is disclosed a stationary robotic system for furnace tending operations, and more particularly for aluminum furnace tending operations.

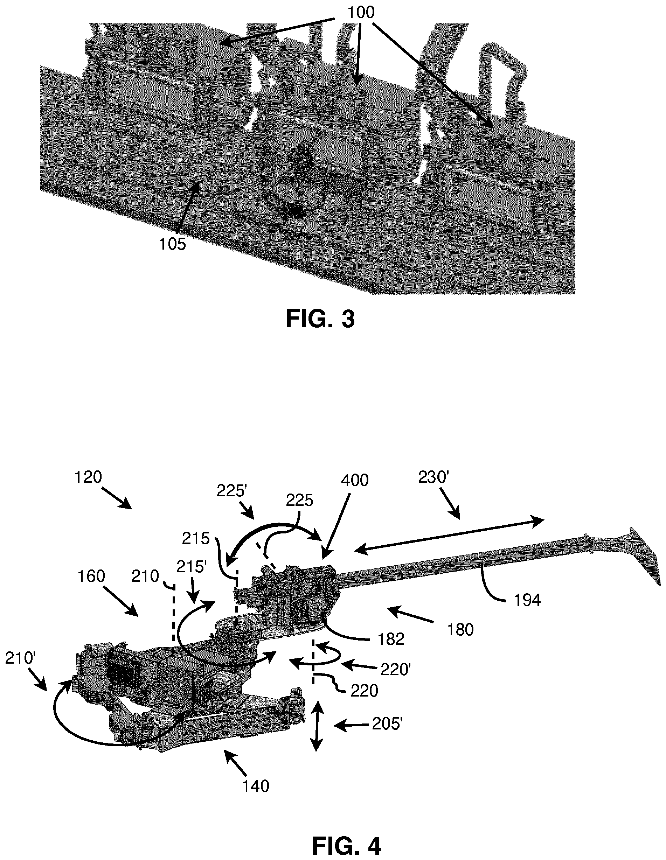

It is worth mentioning that, according to an embodiment, the stationary robotic system must be operational, with few to no modifications both a) in cast houses comprising a railing system (see ex. Fig. 3), wherein the railing system is adapted to move the robotic system between stations (in front of a selected furnace and away from the furnaces); and b) in cast houses where Autonomous Mobile Robots (AMRs) (see ex. Fig. 2) or Automated Guided Vehicles (AGVs) are adapted to move the robotic system (see ex. Fig. 1) between stations (facing the door of a selected furnace and away from the furnaces).

Accordingly, it is an object that the robotic system is movable between stations, aka facing one furnace to facing another furnace. According to a preferred embodiment, the robotic system is adapted with an autonomous power supply, preventing the robotic system to be stuck in a permanent location or the necessity of using of a power cable to power the robotic system, what would clutter up the workplace. It is worth mentioning that the autonomous power source is the preferred realization of the robotic system, regardless of the solution used to move the robotic system between stations.

It is an alternative object to have the robotic system be powered through a power cable connecting the robotic system to a power source, e.g., the grid, when performing operations, connected the robotic system whenever the robotic system is installed at a station, or wherein its battery cells are low.

It is another object that the robotic system be able to perform different specialized tasks using with the same tool. Such specialized tasks comprise a skimming task, a cleaning task, a mixing task, and addition of material (other metal and additives for alloy formation and post-consumption material) in the furnace by pushing material off a platform temporarily placed between the robotic system in the furnace.

Referring now to the drawings, and more particularly to Figs. 1-3, embodiments of a robotic system (e.g., robotic system **120** of Fig. 1) are adapted to be moved between stations by a transport vehicle, e.g., AMR **130** (see Fig. 2). Other embodiments (e.g., robotic system of Fig. 3) are adapted to be moved between stations by a railing system **105** having a path extending in front of furnaces **100.**

Referring to Figs. 1 and 4-7, the robotic system **120** consists of a, e.g., self-elevating and self-leveling platform **140** on which is rotatably mounted a Selectively Compliant Articulated Robot Arm, aka SCARA, arm assembly **160,** and more precisely an articulated SCARA arm assembly **160,** at the distal extremity of which is rotatably mounted a tool driving assembly **180** adapted to drive a tool **194.**

It is worth mentioning that in a preferred realization the arm assembly of the robotic system **120** is an articulated SCARA arm assembly. However, in some embodiments, the arm assembly may comprise a single arm, or a plurality of , aka two or more, articulated arms having joints connecting them, the arms being thus flexible relative to each other. Selection of one option may depend, e.g., on the reach desired for the arm assembly.

In a preferred embodiment, axis(es) of the joint(s) and of the rotatable mounting of the arm assembly to the platform are parallel to each other, and preferably vertical. Therefore, the structure of the robotic system **120** may support the dead load of the arm assembly and components mounted thereto, e.g., tool driving assembly, without the dead load exerting a load toward relative movements of components the gravitation may compel toward.

Referring to Figs. 3, 4, 6 and 7, the combination of the SCARA arm assembly **160** and the tool driving assembly **180** features together five degrees of freedom, comprising the following degrees of freedom:
- 1. Rotational degree of freedom - rotation **210'** of the SCARA first arm **170** relative to the platform **140** around rotation axis **210,** allowing displacement of the SCARA second arm **176** in a plane perpendicular to the axis **210;**
- 2. Rotational degree of freedom - rotation **215'** of the SCARA second arm **176** relative to the SCARA first arm **170** around rotation axis **215,** allowing setting position of the tool assembly reference point **235** of the tool driving assembly 180 mounted to the SCARA second arm **176;**
- 3. Rotational degree of freedom - rotation **220'** of the tool driving assembly **180** relative to the SCARA second arm **176** around rotation axis **220** allowing directing the tool **194** in different directions in a plane perpendicular to the axis **220;**
- 4. Rotational degree of freedom - rotation **225'** of the tool translating mechanism **188** around rotation axis **225,** allowing modification of slope of the tool **194** between a most elevated slope and least elevated slope, thus relative to the to the axis **225;** and
- 5. Linear degree of freedom - linear displacement **230'** of the tool **194,** thus translation of the front extremity **196** of the tool **194,** relative to the tool assembly reference point **235** along displacement axis **230,** with the tool assembly reference point **235** being typically the connection of the tool driving assembly **180** with the SCARA second arm **176** along the axis **220.** The linear degree of freedom provides freedom of displacement of the front extremity **196** of the tool **194** in a second, preferably vertical, plane of operation parallel to the axis **220.**

According to an optional embodiment, the robotic system **120** is further adapted to be customizable regarding its operating height. The robotic system **120** is adapted to set the elevation of the platform following displacement axis to stand on the ground, freeing thereby the robotic system **120** from, e.g., the AMR **130.** According to embodiments, the robotic system **120** is adapted to raise in a stable position among a plurality of available stable positions, aka heights of the platform **140,** which allows the robotic system **120** to adjust its height according to the height of the door sill of the furnace **100** to tend.

Referring now to Figs. 1, 2, 3 and 5, the robotic system **120** comprises a platform **140** adapted to elevate and level itself when powered. The platform **140** comprises a pair of scissor elevating legs **142** driven by hydraulic actuators **144.** Operation of the hydraulic actuators **144** allows to drive the platform **140** between a) an operating position wherein the platform **140** stands on the ground with the scissor legs **142** extended, with the operating position allowing to tend the furnace **100;** and b) an transport position (e.g., Fig. 1) where the scissor legs **142** are compressed, designed in that configuration for the underbelly **146** of the platform **140,** e.g., to abut top surface(s) of the AMR **130** with the lower extremity of the scissor legs **142** distant to the ground. Thereby, the AMR **130** is free to move the robotic system **120** between stations.

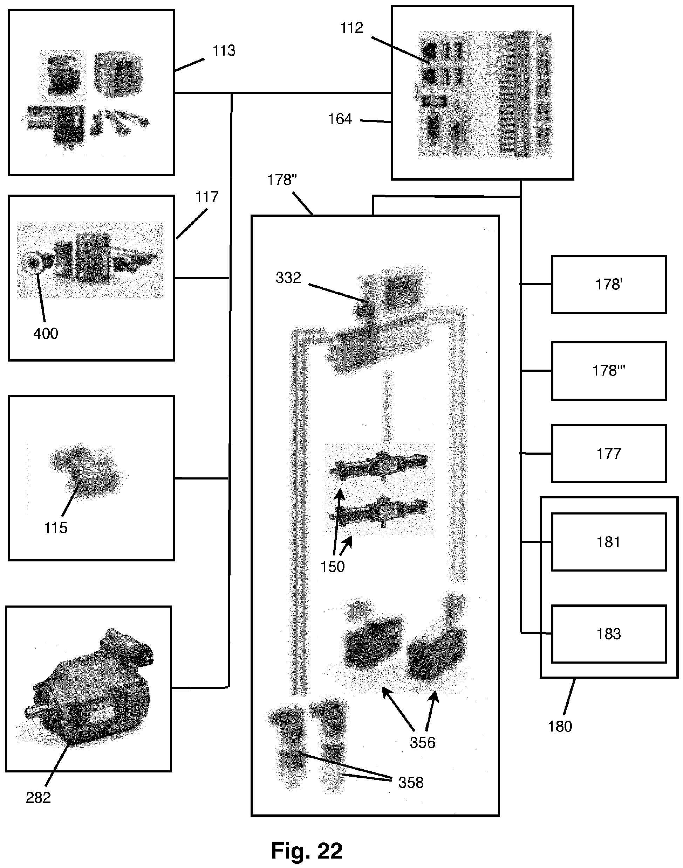

In a preferred embodiment, the platform **140** comprises scissor legs **142** with hydraulic components, e.g., two (2) to four (4) hydraulic actuators 150, adapted to adjust the scissor legs **142** and level the platform **140.** According to a preferred realization, hydraulic actuators **150** are operating to level the deck **152.** According to a preferred realization, hydraulic pressure in the hydraulic actuators **150** is monitored during furnace tending operations to ensure stability of the robotic system **120** throughout the operation. Such monitoring allows the controller assembly 112, Fig. 22, to limit the operating speed and position the tool **194** can adopt at any time during the furnace tending operation.

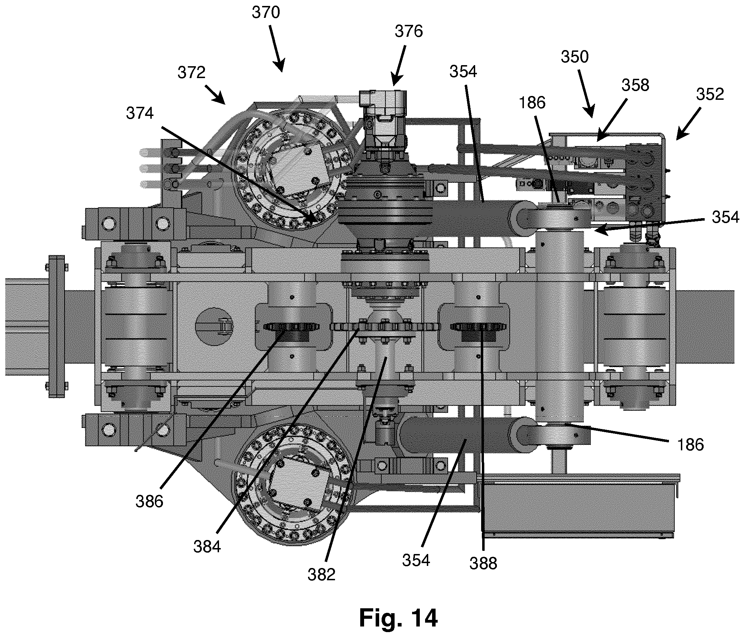

According to a preferred realization, controllable one-way valves, e.g., controllable one-way valve 358, Fig. 14, are mounted to the fluid conduits. The controllable one-way valves allow to lock the elevation of the platform **140** during a furnace tending process.

It is worth mentioning that hydraulic pressure monitoring is performed over the hydraulic actuators **150** during tending process, with the robotic system **120** therethrough monitoring stability of the robotic system **120** in real time and thereby be able to adjust extension of the hydraulic actuators **150** if the level of the robotic system **120** is affected in any way during the tending operation. Accordingly, the robotic system **120** is both adapted to elevate itself to an operating position, to level itself, but also to monitor the level and correct the level during tending operation.

Referring additionally to Fig. 4, the platform **140** comprises an underbelly **146** facing downward adapted to butt off against the AMR for displacements, and a deck **152** opposed to the underbelly **146,** facing upward. A first rotation means, preferably a first slew bearing **154,** through which is rotatably mounted the SCARA first arm **170** to the platform **140,** is designed to allow the SCARA first arm **170** to rotate around the first axis **210.** The slew bearing **154** is adapted to support weight, moments, and generally all static efforts the SCARA arm assembly **160** may transmit to the platform **140.**

It is worth mentioning that even though slew bearings, such as slew bearing 154, are used as preferred components for some rotational connections of components of the SCARA arm assembly **160** of the robotic system **120,** alternative components may also be used in alternative embodiments without automatically departing from the scope of the present description. Furthermore, slew bearings are part of preferred embodiments since advantageous. They provide additional advantages over most alternatives, comprising great resistance to static forces and moments, free rotation of components relative to each other, and a passageway the present robotic system **120** takes advantage of as will be more understandable considering more detailed description hereinafter.

Referring to Figs. 1, 5 and 6, the SCARA arm assembly **160** comprises a SCARA first arm **170** mounted to the first slew bearing **154** which defines the rotation axis **210** of the SCARA first arm **170** relative to the deck **152.** The SCARA first arm **170** has, mounted along about the first slew bearing **154,** e.g., a control cabinet **164,** a battery cabinet **166** housing preferably battery cells, and power cabinet **168** housing a control panel and hydraulic pump assembly .

The SCARA first arm **170** has a second slew bearing **172** mounted thereto distant to the first slew bearing **154** with the SCARA second arm **176** rotatably mounted thereto. The second slew bearing **172** defines the rotation axis **215.** A SCARA second arm **176** is rotatably mounted to the second slew bearing **172** allowing rotation of the SCARA second arm **176** relative to the SCARA first arm **170** around the rotation axis **215.**

In other words, in a preferred embodiment the robotic system **120** comprises a raisable platform **140,** and an articulated SCARA arm assembly **160** rotatably mounted thereto, wherein the SCARA arm assembly **160** comprises at least two SCARA arms **170, 176** rotatably mounted to each other, further wherein cabinets **164, 166, 168** are fixedly mounted to the **160,** thereby being rotatable with the SCARA arm assembly **160** relative to the platform **140.**

The SCARA second arm **176** has a third slew bearing **174** mounted thereto distant to the second slew bearing **172** with a tool assembly reference point **235** defined thereto. The third slew bearing **174** defines the rotation axis **220.** A tool driving assembly **180** is rotatably mounted to the third slew bearing **174** allowing rotation of the tool driving assembly **180** relative to the SCARA arm assembly **160,** and more precisely the SCARA second arm **176,** around the axis **220.**

In a preferred realization, the rotations axis **210, 215, 220** are parallel. Furthermore, the facing walls, for example the deck **152** of the platform **140** and the substantially flat lower face **262** of the SCARA first arm **170** are preferably designed to allow full rotation of one relative to the other without them hitting each other. Similarly, the SCARA first arm **170** and the SCARA second arm **176** are also preferably designed to allow full rotation of one relative to the other without them hitting each other. In order to provide the necessary clearance, according to a preferred realization, the SCARA first arm **170** features a most elevated top wall **264** about the first slew bearing **154,** and a lower top wall **266** about the second slew bearing **172,** wherein distance between the most elevated top wall **264** and the lower top wall 266 provides clearance for a driving assembly **178,** designed for driving rotation of the SCARA second arm **176** as further discussed hereinafter.

It is worth mentioning that a similar design is used for the SCARA second arm **176,** comprising a substantially flat lower face **272,** a most elevated top wall **274** about the second slew bearing **172,** and a lower top wall **276** about the third slew bearing **174,** with a vertical distance between the most elevated top wall **274** and the lower top wall **276** provides clearance for a driving assembly dedicated to driving rotation of the tool driving assembly **180** around the axis **220** as discussed hereinafter.

One person skilled in the art would recognize that alternative configurations of the SCARA first arm **170** and the SCARA second arm **176** are available to provide similar clearances without departing from the scope of the present description.

According to a preferred realization, the axes **210, 215, 220** are parallel, allowing the tool assembly reference point 235 to travel in a plane perpendicular to the axes **210, 215, 220** and the dead load to be structurally supported by the structure of the SCARA arm assembly 160 and the slew bearings **154, 172, 192.** That configuration further limits the static forces and moments the slew bearings **154, 172** and **174** are designed to undergo, decreasing the hydraulic power necessary to operate since limiting the dynamic forces required to hydraulically maintain the tool assembly reference point **235** in a target position during tending operations as is discussed further hereinafter.

Referring to Figs. 1, 4, 6, 7 and 13, the tool driving assembly **180** comprises a turret **182** that is rotatably mounted to the third slew bearing **174** and through which the tool driving assembly **180** is rotatably mounted to the SCARA arm assembly **160.** A set of trunnions **186** are used to rotatably mount the tool translating mechanism **188** to the turret **182,** allowing to change the slope by rotating the tool **194** relative to the axis **225** passing through the trunnions **186.** The tool driving assembly **180** also comprises a tool translating mechanism **184** allowing to move the tool **194** forward and backward. Accordingly, the front extremity **196** of the tool **194** may:
1- be directed relative to the, preferably, horizontal axis **220;**
2- be sloped trough rotation around the, preferably, horizontal axis **225;** and
3- be moved forward and backward relative to the tool assembly reference point **235** along axis **230** of the tool driving assembly **180.**

For furnace tending operation, the tool driving mechanism **184** is adapted to drive a tool **194** having at the front extremity **196** a spade-like blade **198** that is adapted, e.g., to skim, to clean, to mix molten metal in the furnace, and to push molten material into the furnace.

It is also worth mentioning that the general configuration of the robotic system **120** is adapted for the tool **194,** and more precisely the tool assembly reference point **235** and the front extremity **196** of the tool **194** to travel freely within the limits offered by the degrees of freedom of the robotic system **120,** which broadens the area the tool **194** may operate in. It is further worth mentioning that the rear extremity **197** of the tool **194** can extend above components of the robotic system **120,** including the SCARA second arm **176,** and optionally at least some of the control cabinet **164,** the battery cabinet **166** and the power cabinet **168** without hitting them. Accordingly, the robotic system **120** is designed to adopt a large range of operating positions and a broad reach.

It is worth mentioning that the configuration of the deck **152** and of the SCARA first arm **170** with cabinets **164, 166, 168** mounted to the SCARA first arm **170** allows a rotation range of at least, two hundred and seventy (270) degrees, and more preferably at least three hundred (300) degrees, and more preferably almost three hundred and sixty (360) degrees, distributed as one hundred and eighty (180) degrees in each direction of a neutral direction, around the rotation axis **210,** thus relative to the platform **140,** with the structure of the power artery travelling therein limiting the rotation as discussed further hereinafter.

It is worth mentioning that the dimensions of the SCARA arms **170, 176,** the locations and dimensions of the slew bearings **154, 172, 174** and the height of the cabinets **164, 166, 168** connected to the SCARA first arm **170** are designed for providing the necessary clearance for the SCARA second arm **176** to preferably have a rotation range of at least, two hundred and seventy (270) degrees, and more preferably at least three hundred (300) degrees, and more preferably almost three hundred and sixty (360) degrees, distributed as one hundred and eighty (180) degrees in each direction of a neutral direction, around the rotation axis **215,** with the structure of the power artery travelling therein limiting the rotation as discussed further hereinafter. Such rotation range allows to operate the robotic system **120** with a large range of operable positions of the tool assembly reference point **235** and the tool driving assembly **180** for reasons that are discussed hereinafter.

It is worth mentioning that the tool driving mechanism **184** is designed to preferably have a rotation range of at least, two hundred and seventy (270) degrees, and more preferably at least three hundred (300) degrees, and more preferably almost three hundred and sixty (360) degrees, distributed as one hundred and eighty (180) degrees in each direction of a neutral direction, around the rotation axis **220,** with the structure of the power artery travelling therein limiting the rotation as discussed further hereinafter. Such rotation range allows the robotic system **120** to operate in a large range of operable positions for reasons that are discussed hereinafter.

It is also worth mentioning that the tool **194** is designed to preferably have a rotation range extending below the horizontal up to minus thirteen (-30), minus fourty-five (-45) and even minus sixty (-60) degrees relative to the horizontal and a maximum elevation of at least zero (0), at least five (5), at least ten (10) and at least fifteen (15) degrees, with the latter values being obtained when the front extremity **196** of the tool **194** is elevated relative to its rear extremity **197,** resulting from the rotation of the tool **194** around the rotation axis **225.** Such rotation range allows to operate the robotic system **120** with a large range of operable positions for reasons that are discussed hereinafter.

It is worth mentioning that, according to a first embodiment, the tool driving assembly **180** is adapted to provide the necessary extent (aka reach) to the front extremity **196** of the tool **194** to reach all zones of the furnace when tending a furnace. The tool **194** further features the physical characteristics necessary to resist to the undergone forces and temperature resulting from furnace tending processes.

It is further worth mentioning that the robotic system **120** also features a relatively small ground footprint in relation with the available reach of the tool **194.** It also features a potential limited, relatively small, horizontal above ground footprint comprising the ground touched by the robotic system **120** and the ground area hovered by components of the robotic system **120** according to a plan view. When the SCARA arm assembly **160** is in a compact configuration with the SCARA second arm 176 substantially aligned and above the SCARA first arm **170,** and the tool driving assembly **180** aligned and configured to minimize the horizontal above ground footprint, e.g., the tool **194** retracted to an about-central position depicted on Fig. 1, the above ground footprint is minimized. The robotic system **120,** in that compact configuration, features a balanced weight easing displacement and optimizing stability of the robotic system **120** for its displacement by an AMR **130.** It may however extend to a greater above ground footprint when configured for the tool driving assembly **180** to adopt its maximum reach.

Referring now to Figs. 3, 6, 8, 9 and 10, the robotic system **120** comprises a powering assembly **280,** comprising the cabinets **164, 166, 168,** and a fluid reservoir **169.** The powering assembly **280** is fixedly mounted to the SCARA first arm **170,** rotating with the SCARA first arm **170** relative to the platform **140.** The power cabinet comprises a hydraulic pump **282,** preferably a variable displacement hydraulic pump, a kidney loop (not depicted) powered by, preferably, a fix displacement hydraulic pump (not depicted), and other electric and hydraulic components involved in powering and controlling the robotic system **120.** Such components would be understandable by one person skilled in the art. The control cabinet **164** houses the controller assembly **112.** The powering assembly **280** are mounted substantially close to the first slew bearing 154, generally distant to the second slew bearing **172.** The powering assembly **280** is designed to provide counterweight against the weight of the parts of the robotic system **120** mounted to the second slew bearing **172** and thus balancing weight distribution over the platform 140 and decreasing dead load exerted over the first slew bearing **154.**

In a preferred embodiment, the hydraulic pump powering driving assemblies, e.g., driving assembly **180,** is a variable displacement pump **282.** A kidney loop designed for filtering the hydraulic fluid and cooling the hydraulic fluid, is powered, preferably, by a fix displaced pump.

Furthermore, positioning of the powering assembly **280,** since mounted about the platform **140** substantially distant from the furnace **100,** with the general extension of the SCARA arm assembly **160** and of the tool **194** taking place between the powering assembly **280** and the furnace, decreases the heat the powering assembly **280** is subject to, decreasing the components necessary to cool off the powering assembly **280.**

According to an embodiment, dynamic cooling components are limited to a minimum. In such an embodiment, a fan **284** is mounted to the rear face of the rearmost cabinet **168,** cooling off hydraulic fluid circulating in the kidney loop about the fan **284.**

In cabinets **164, 166, 168,** other potentially heat-sensible components (not identified) of the powering assembly **280** generally opposed to and shielded from the heat source that is the furnace may have air vortexes located thereto or cooling fluid circulating close to.

According to an embodiment, not depicted, cooling vents are fluidly connecting side-located powering assembly **280.** According to alternative embodiments, the battery cells 167 are isolated from the environment, or are cooled off through a distinct fan and filtering subsystem.

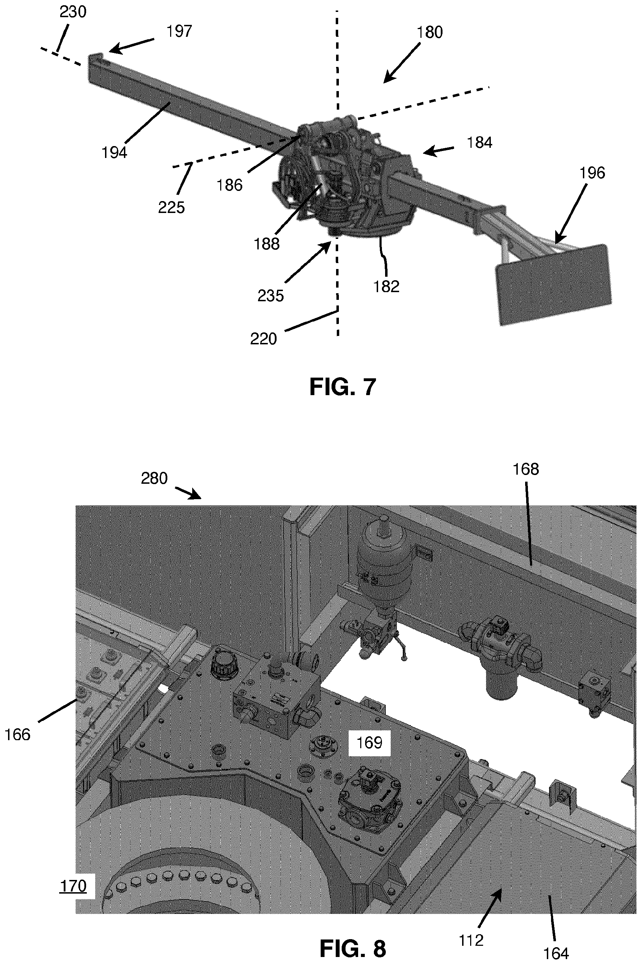

Referring particularly to Figs. 8, 9 and 10, the hydraulic fluid reservoir **169** is mounted rear to the SCARA first arm **170,** with a hydraulic power cabinet **168** mounted rear to it. On the rearmost face of the hydraulic power cabinet 168 is mounted the variable displacement pump **282,** powering the hydraulic circuit, with the battery cells **167** powering the hydraulic pump **282** and driving assemblies as is explained hereinafter. The controller assembly **112** is also powered by the battery cells **167** and is designed to control the operation of the hydraulic pump **282,** the kidney loop hydraulic pump, and other components such valves, an image capture system, automation components, etc.

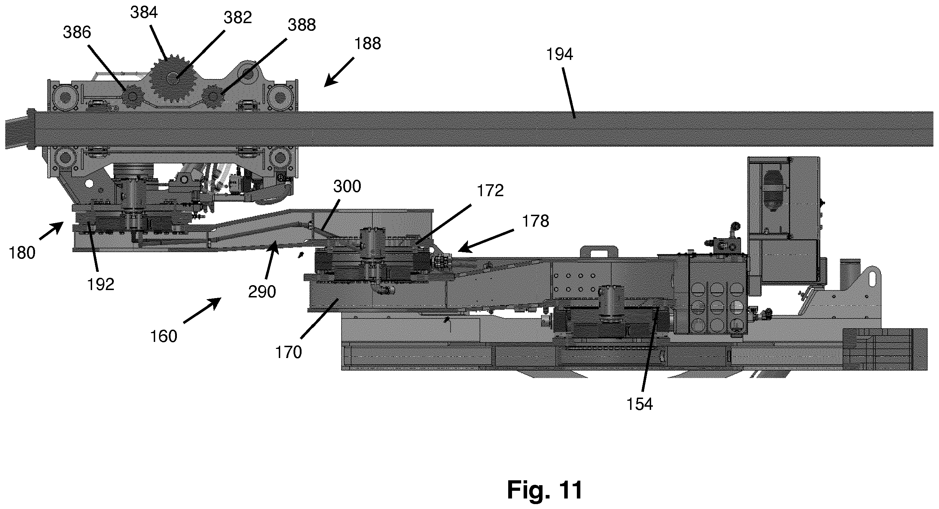

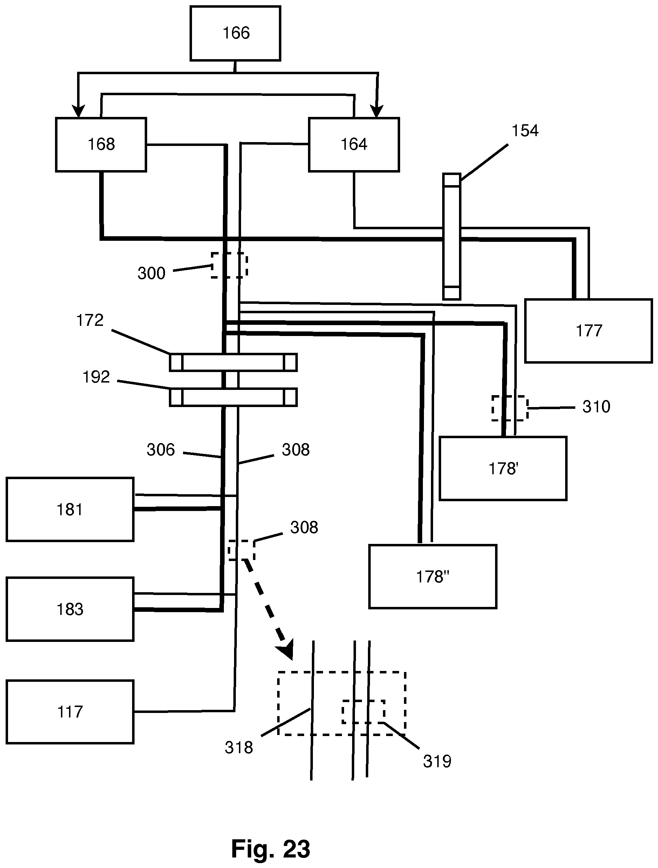

Referring additionally to Fig. 11 and to the schematic of Fig. 23, the SCARA arm assembly **160** features an internal passageway **290** connecting the SCARA first arm **170** close to the first slew bearing **154** to the tool driving assembly **180** through the second slew bearing **172** and the third slew bearing **192,** partially depicted through the longitudinal cross-section of the SCARA second arm **176** depicting a power artery **300** comprising hydraulic tubing **306** and a cable assembly **308,** the latter comprising one or more command cables **318** and electric (powering) cables **319.**

It is worth mentioning that hereinafter that combination of hydraulic tubing **306** and cable assembly **308** is called a power artery **300.** The power artery **300** may split for 'local' needs providing a power vein **310** comprising at least one of, but usually all of the hydraulic tubing, the electric cables and command cable with the power artery **300** continuing its path past the split power vein **310.**

Referring back to the figures, the power artery **300** extends in the passageway **290,** transmitting power and instructions to driving assemblies, e.g., driving assembly **178** and the tool driving assembly **180,** with power veins **310** splitting from the power artery **300** to connect to a driving assembly when appropriate, e.g., through openings in a side wall of the SCARA arm assembly **160.**

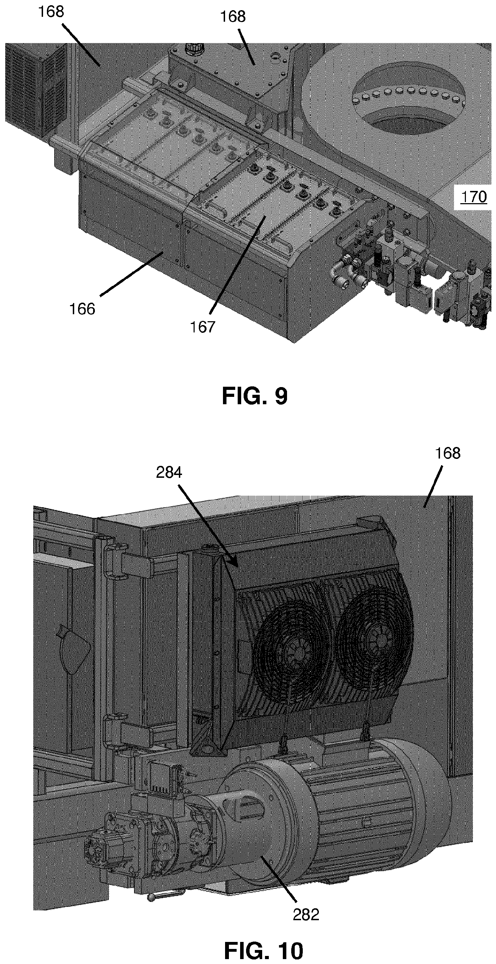

It is worth mentioning that the hydraulic pump **282,** Fig. 10, generates hydraulic power for the needs of and transmission by the power artery **300,** with the different components connected to the power artery **300** tapping power therefrom when needed. Therefore, the hydraulic power cabinet **168** operates relatively independently from the individual power needs of the driving assemblies. The hydraulic pump **282** generates hydraulic power based on global power requirement, e.g., based on monitored pressure, with the driving assemblies tapping in on demand.

Referring to the schema of Figs. 22 and 23, hydraulic power is distributed to the rotational driving assemblies **178', 178".** In parallel, the power artery **300** extends in the passageway **290,** through the second slew bearing **172** and third slew bearing **192** to another driving assembly **178‴,** and the tool driving assembly **180.** The power artery **300** is to maintain operation with the passageway **290** having a changing configuration as the SCARA arm assembly **160** flexes, regardless of relative angles.

According to an embodiment, the power artery **300** also extends upstream through the first slew bearing **154** to power the driving assembly **177** comprising the hydraulic actuators **144** associated with the scissor legs **142.**

Downstream, the power artery **300** extends through second slew bearing **172** and the third slew bearing **192.** The power artery **300** is designed to power the driving assemblies 181, 183 driving movements of the tool **194.**

Not depicted. In alternative embodiments, the power artery may be split once or may times into one or more local power veins comprising at least one of a hydraulic tubing connected to and fed by the power artery, a command cable, and/or electric cables. For instance, in some embodiments, e.g., cameras, are mounted to the SCARA second arm or further downstream, with, e.g., a command cable (part of the power vein) splitting from the power artery and connected, e.g., through an opening, to the camera. Alternative embodiments with additional driving assemblies, sensors or other components can thus be connected to through a power vein without departing from the scope of the present description.

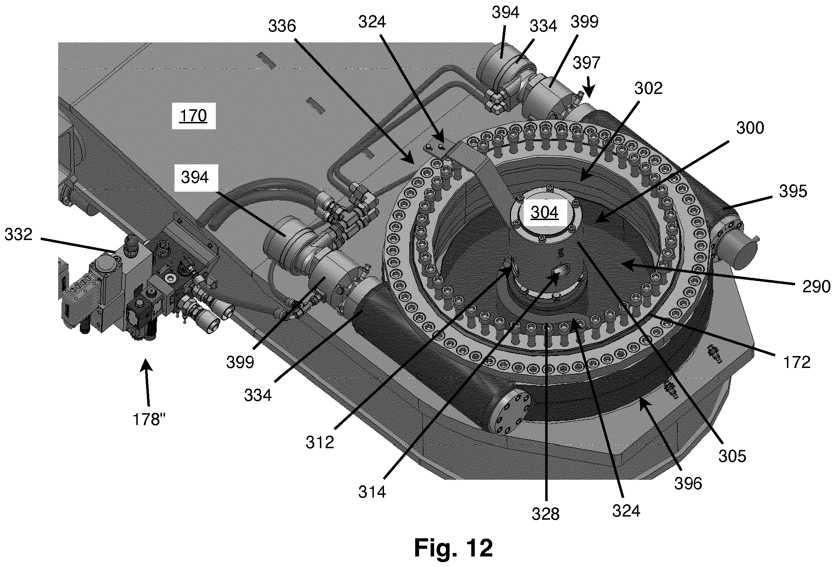

Referring additionally to Fig. 12, an exemplary extent of a power artery **300** and a powered driving assembly **180** are depicted. The depicted rotational driving assembly **178"** controls rotation of the SCARA second arm **176** (not shown on Fig. 12) relative to the SCARA first arm **170.** As depicted, the power artery **300** extends in the passageway **290,** with the hydraulic tubing extending through a rotary hub **302** comprising a core portion **304** and a barrel portion 305 mounted around the core portion **304.** Inlet(s) **312** and outlet(s) **314** are distributed around the circumference for of the core portion **304** to be in fluid connection with the barrel portion **305** over 360 degrees, thereby having hydraulic fluid circulation in the power artery **300** regardless of the flexion of the SCARA arm assembly. Inlet(s) **312** and outlet(s) **314** present on the barrel portion **305** for the continuation of the fluid tubing in the next arm. Structurally, the core portion **304** is fixedly mounted to the SCARA first arm **170** and the barrel portion **305** is fixedly mounted to the SCARA second arm, rotating with the SCARA second arm **176,** and allowing further extension of the hydraulic portion of the power artery **300** in the passageway **290** extending in the SCARA arm assembly. The cable assembly **324** of the second power artery **300,** about the second slew bearing **172,** is mounted to a chain 328 guiding the course of the cable assembly **324** in all angles the SCARA second arm may adopt relative to the SCARA first arm **170** within the defined limits, preferably between about 180 degrees in one direction and 180 degrees in the opposed direction. The upstream ends of the chain **328** and of the cable assembly **324** are fixedly mounted to the SCARA first arm **170.** The downstream ends are fixedly mounted to the SCARA second arm, exerting a rotation of the chain **328** and cable assembly **324** along the rotation the SCARA second arm. Thereby, the power artery **300** features a joint assembly able to respond to flexion of the joint of the articulated SCARA arm assembly.

In a preferred embodiment, the chain **328** features a series of links, aka frame connectors, rotatable relative to each other up to a limit angle, limiting flexion thereof to a minimum radius of curvature of the chain and of the cable assembly **324** set therein high enough to limit wear. The flexibility of the chain **328** and cable assembly **324** further prevents the cable assembly **324** from premature wear that would occur if the cable assembly **324** was undergoing twisting. It further allows the chain **328** and cable assembly **324** to wrap to one side or the other of the base of the rotary hub **302** as the SCARA second arm rotates in one direction or the other relative to the SCARA first arm **170.**

Referring still to Fig. 12, the driving assembly **178",** designed for controlling the rotation of the SCARA second arm relative to the SCARA first arm **170,** consists in a controlled zero-lap valve **332** having no-limit positions powered by the electric cables, a pair of hydraulic actuators **334** connected to the control valve **332,** and a sensor **336,** e.g., a position sensor or an angular sensor. Based on a target position signal transmitted to the control valve **332** through the command cable of the power vein, the control valve **332** taps into the available hydraulic power and feeds hydraulic power to the paired hydraulic actuators **334** connecting the SCARA second arm to the SCARA first arm **170.** The hydraulic actuators **334** thereby apply a torque resulting in rotation of the SCARA second arm. The sensor **336,** connected to the control valve **332,** provides continuous feedback to the control valve **332** on the actual angle of the SCARA second arm **176** relative to the SCARA first arm **170,** allowing the control valve **332** to perform local control of rotation, aka local feedback loop, based on received target position and a locally-fed feedback position signal.

In a preferred embodiment, the control valve **332** of the driving assembly **178** is a Pressure and flow (P\Q) control valve designed to modulate operation in view of variable hydraulic pressure and flow provided through the feeding power vein.

In a preferred embodiment depicted on Fig. 12, the hydraulic actuators **334** consists in rotary actuators **394** each driving the shaft of a worm screw **397** (hidden in the casing **395**) that engages a worm wheel **396** mounted to the component, e.g., the other arm, to drive the rotation.

In a preferred embodiments, rotation about vertical axis **210, 215,** Fig. 4, are subject to mechanical brakes **399** locking the shafts of the worms screws **397** against rotation, with the mechanical brakes **399** being activated once the target position is reached.

It is worth mentioning that the combination of control valve **332** and sensor **336** allows to operate without a mechanically imposed reference angle such as end-or-course of hydraulic actuators. Such realization provides additional flexibility, easier configuration and faster system responses.

It is also worth mentioning that the design is done such as placing hydraulic tubing that is out of the passageway **290** when possible in a shielded position, whereby having, e.g., the structure of the SCARA arm shielding the hydraulic tubing from the heat of the furnace.

As depicted on schema of Fig. 22, a similar rotational driving assembly **178'** comprising a control valve **332** combined with a pair of hydraulic actuators **334** and a sensor **336** is similarly used for the rotation of the SCARA first arm **170** relative to the platform **140.**

As depicted on schema of Fig. 22, a similar driving assembly **178‴** comprising a control valve **332** combined with a pair of hydraulic actuators **334** and a sensor **336** is similarly used for the rotation of the tool driving assembly **180** relative to the SCARA second arm **176.**

Still depicted on Fig. 22, the robotic system **120** preferably comprise one or more thermal sensors **115** adapted to participate in monitoring the operating conditions of the robotic system **120.**

Referring now to Figs. 11, 13 and 14, the slope of the tool translating mechanism 188 is driven by driving assembly **350** comprising a control valve **352,** a sensor **356** and hydraulic actuators **354.** The control valve **352,** comprising an integrated controller dedicated for controlling movements relative to an axis, with the control valve 352 being an integrated axis controller directional valve, is mounted with a thermal shield (not shown) thermally insulating the control valve **352** from the heat of the furnace. The control valve **352,** powered by a power vein, is powering the pair of cooperating hydraulic actuators **354** generating rotation of the tool **194** relative to the trunnions **186.** Through extension/compression of the hydraulic actuators **354,** the control valve **352** controls the slope of the tool **194.** Preferably, a controllable one-way valve **358** is further part of the driving assembly **350,** being able to controllably lock the tool **194** in a desired slope angle.

The tool translating mechanism **188** is for its part driven by a driving assembly **370** comprising a zero-lap valve **372,** a sensor **374** and a hydraulic motor **376** adapted to drive a shaft **382** on which is mounted a driving cogwheel **384.** A chain (not depicted) is anchored to the top face of the tool **194** frontward and rearward of the translatable portion of the tool **194.** Through a rotation of the cogwheel **384,** causing relative displacement of the chain, the tool translating mechanism **188** is designed to move forward and backward the tool **194.** It is to be noted that leading cogwheels **386, 388** are present frontward and rearward of the driving cogwheel **386.** The lead cogwheels **386, 388** are designed to maintain tension of the chain and to prevent misalignment of the chain from resulting is potential derailing. In a preferred realization, a rotative hydraulic motor **376** drives the drive shaft **382,** driving the driving cogwheel 384. The sensor **374** connected to the zero-lap valve **372** provide continuous feedback on the current extension of the tool **194.**

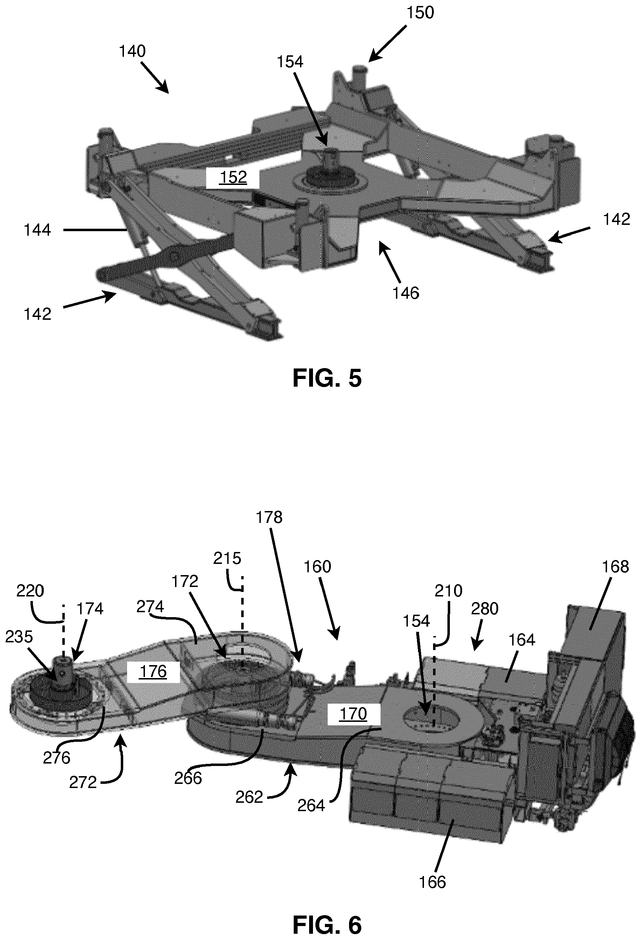

It is worth mentioning that control of the elevation of the platform, of the orientation of the SCARA first arm, and of the orientation of the SCARA second arm allows to fix in space the tool assembly reference point **235,** Fig. 6. Control of the orientation of the tool driving assembly, of the slope of the tool, and of the longitudinal displacement of the tool allows to control location and displacement of the spade-like blade **198,** Fig. 7. The combination of these controls provide a virtual expandable operation sphere having a movable center. Programming and controls are designed in that operational perspective.

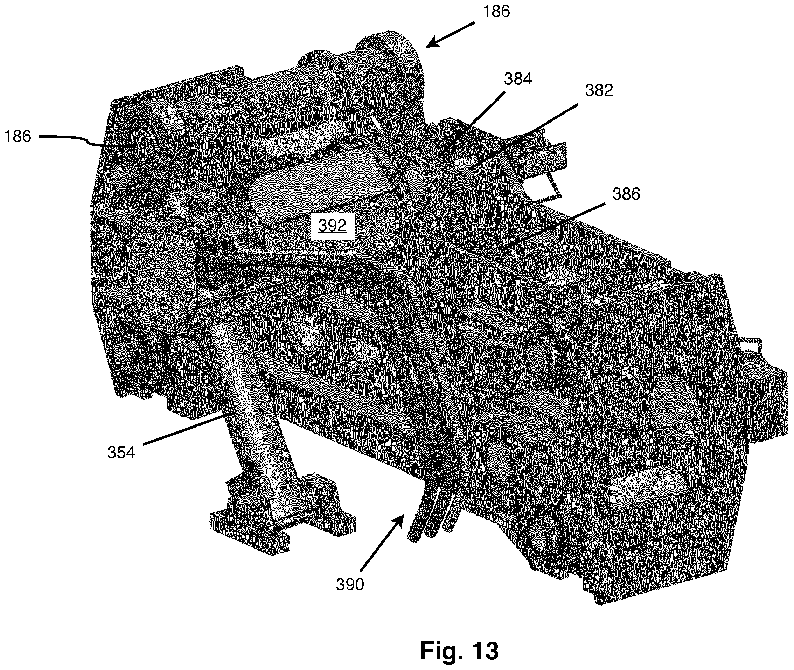

Back to figure 13, it is worth mentioning that portions of hydraulic tubing **390** not protected by thermal shields **392** comprises a) rigid metallic tubing that offer appropriate protection against heat and are appropriate radiating characteristics preventing the circulating fluid to overheat; and b) flexible tubing that is covered with protective material, namely a silicon jacket, in other words a material comprising a fabric with a silicon cover layer designed to cover the flexible tubing, and further wrapped in a reflecting material, namely a aluminized fabric, with the combination limiting heat absorption and having desired reflective characteristics. It is further mentioning that the oil used in the hydraulic system is a fire retardant oil, and preferably Shell Naturelle S2 Hydraulic Fluid 46^{™}.

Referring to Figs. 1, 4 to 7, 12 and 22, it is also worth mentioning that resulting from the design of the robotic system **120,** normally a limited number of the robotic system **120** are dynamically powered at the same time. Accordingly, the single variable displacement pump and power artery configuration of the robotic system **120** provides the necessary power with limited number of tubing and cables. Phases of operations, combined with natural inertia, e.g., inertial against rotation of the SCARA arms **170** and **176,** and use of locking components during some operations, e.g., mechanical brakes 399 and controllable one-way valves, e.g., one-way valve **358,** limits the power requirements during operations. It is finally worth mentioning that through local feedback loops, subsystems of the robotic system **120** are adapted to face variable available hydraulic power, with the subsystems simply reaching desired positions faster or slower based on the available hydraulic power.

In a preferred automated embodiment, the robotic system **120** comprises a one or more cameras **400** and/or other image/distance capturing components (e.g., radars, Lidars) that are connected to the control assembly **112,** and that are used as data source by the automatization program stored in memory and operated by the robotic system **120** to perform autonomous operations. In an embodiment, at least two cameras **400,** or other image capturing components, located at distinct positions distant from each other are used to get a 3D view of the furnace and its content.

According to available embodiments not depicted, one or more cameras **400** (or other image/data capturing components) are mounted behind dynamically controlled shields limiting the period the camera **400** undergoes direct heat from the furnace. According to available embodiments, the camera **400** is mounted behind a transparent thermal shield. According to available embodiments, the camera **400** is mounted on movable components controllably driven between an image capturing position, in which the camera **400** has direct view of the furnace; and a storing position, wherein the camera **400** is shielded from direct heat from the furnace **100.** According to available embodiments, the camera **400** is designed to capture different wavelengths of light are used. According to a preferred embodiments, at least two cameras **400** operate in the same or an overlapping wavelength range.

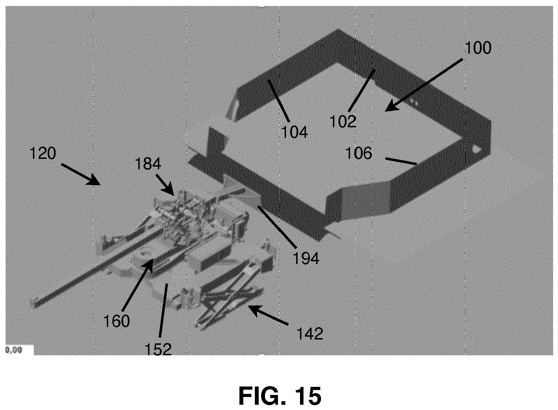

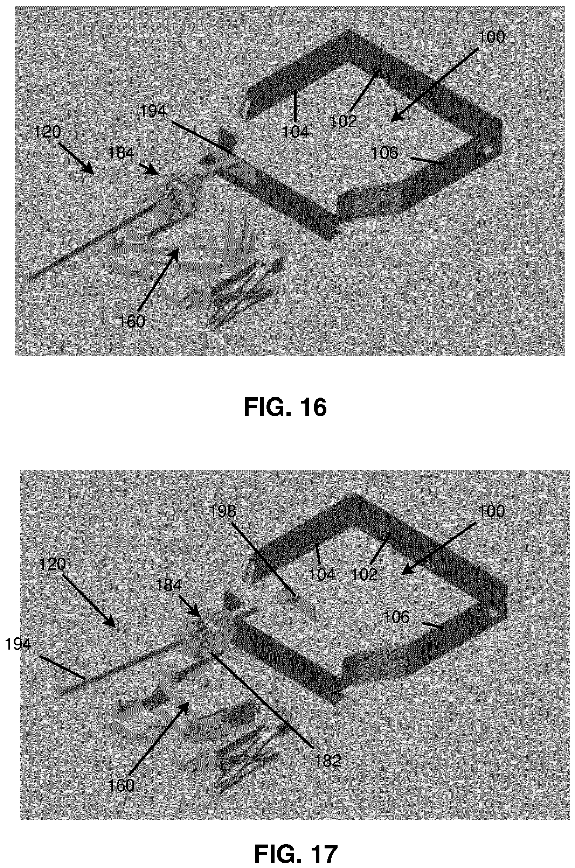

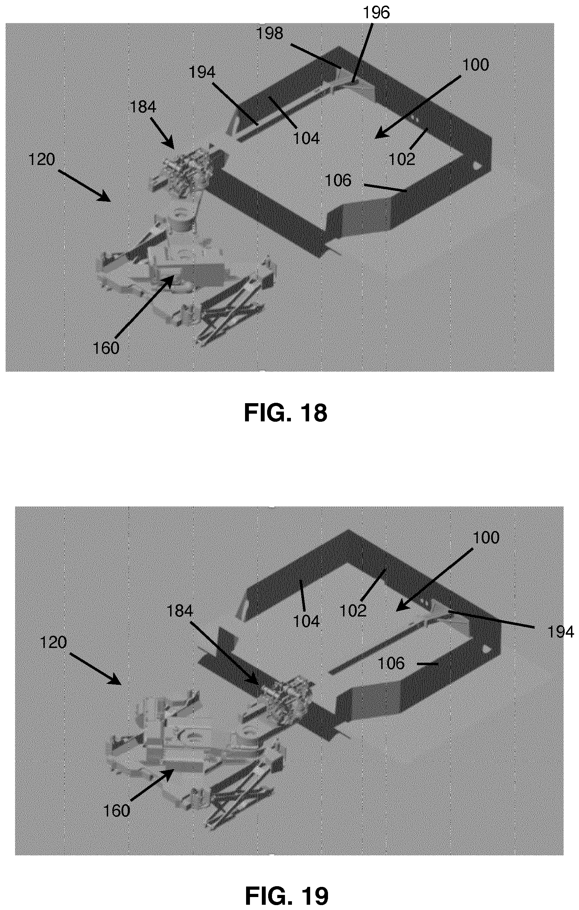

Referring now to Figs. 15 to 19, an exemplary sequence of operation of the robotic system 120 when tending a furnace is provided. Fig. 15 depicts the robotic system 120 initially moved at a station in front of a furnace **100.** The robotic system 120 is initially in a transport position, with the legs 142 extended. Once the AMR removed from under the robotic system 120, the deck 152 is lowered, stabilized, and leveled to adopt the operating position wherein the operating height is set relative to the sill of the furnace for the robotic system 120 to be ready to begin the furnace tending process. Illustrated on Fig. 16, the SCARA arm assembly **160** is deployed such as adjusting the tool assembly reference point 235 , Fig. 6, of the tool **194.** Illustrated on Fig. 17, the SCARA arm assembly **160,** the turret **182** and the tool driving mechanism **184** are driven to move the spade-like blade **198** in the furnace **100.** Fig. 18 illustrates an example of configuration wherein the spade-like blade **198** can reach the end wall **102** of the furnace **100,** the spade-like blade **198** parallel to the end wall **102** and about the left wall **104.** Fig. 19 illustrates an example of configuration wherein the spade-like blade **198** can reach the end wall **102** of the furnace **100** about the right wall **106,** the flat wall of spade-like blade **198** distant from the SCARA arm assembly **160** parallel to the end wall **102.** Accordingly, by displacing the tool assembly reference point **235,** Fig. 6, the spade-like blade **198** at the front extremity **196** of the tool **194** may be positioned anywhere inside the furnace **100,** the spade-like blade **198** being able to be placed parallel to, thus able to scrape, the end wall **102** of the furnace **100.**

According to a preferred embodiment, the spade-like blade **198** of the tool **194** may be used for different functions, comprising e.g., a surface scraping function for cleaning the walls **104, 106,** and the floor of the furnace **100;** a travelling function in which the spade-like blade **198** travels above the molten metal present in the furnace; a mixing function of the molten metal; and a skimming function during which the spade-like blade **198** controllably penetrates the surface of the molten metal and rakes out dross from its surface.

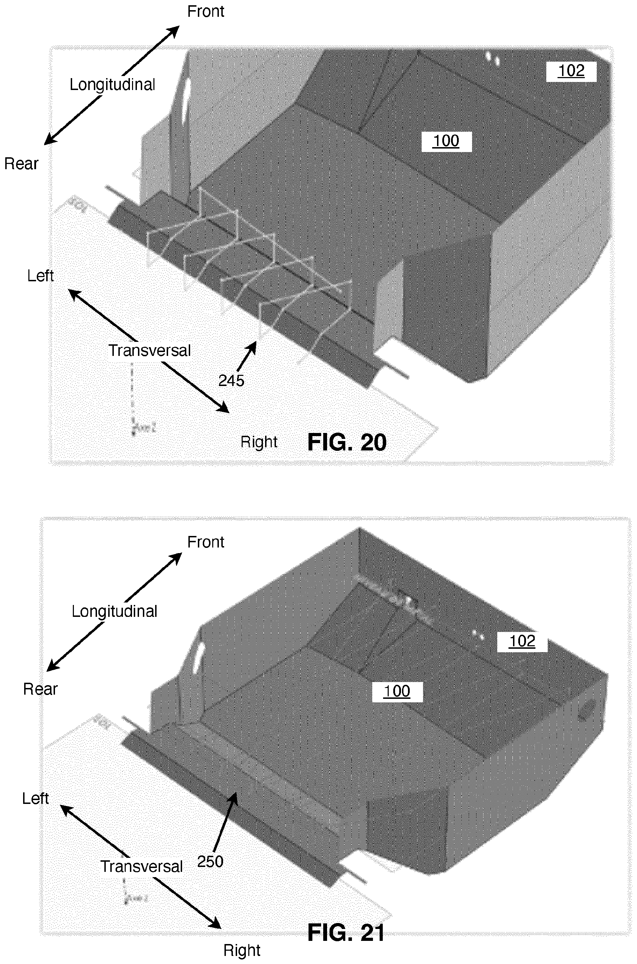

Referring to Fig. 20, an example of a path **245** of the tool assembly reference point **235,** Fig. 6, performed during a furnace tending process is illustrated. As depicted, the tool assembly reference point **235** can take a range of positions, comprising a range of transversal (left/right) locations, and longitudinal (front/rear) positions, thus relatively close or distant to the door sill of the furnace **100.**

Referring to Fig. 21, an example of a projection of a hovering path **250** in a horizontal plane of the front extremity of the tool is illustrated. As understandable from the depicted path projection, the spade-like blade of the tool can hover any location in the furnace **100.** The spade-like blade can be in an operative angle in which the blade may be operated with the robotic system **120,** Fig. 1, remaining stationary, aka at the same station standing on the ground and without having an AMR moving the robotic system **120** during the furnace tending process.

Referring now to Fig. 22, according to an embodiment the robotic system **120** comprises a controller assembly **112,** house in the control cabinet **164,** e.g., Fig. 6, on which is connected a control panel **113** comprising security components (e.g., push buttons and controls adapted to cut off power and menage security features). The controller assembly **112** is connected to the driving assemblies through the communication cable.

According to an embodiment, the controller assembly **112** operates according to an automatization program and parameters, wherein the automatization program and parameter may, for instance, result from a program learning process during which visual data acquired through, e.g., a 3D imaging subsystem **117** comprising, e.g., a camera **400** or other image capturing component, with the data being consolidated by the controller assembly **112.** According to a preferred realization, the e.g., camera **400,** is selected to be compatible with detection of objects in a high-temperature environment, aka precision of detection with objects being at about 800-900 degrees Celsius. According to an embodiment, a structured-light 3D scanner is used to collect data. According to an embodiment, a laser projection for furnace imaging is used to collect data.

According to an embodiment, not depicted, a detection component is protected by a movable thermal shield, with control displacement of the thermal shield providing intermittent field of view of the furnace **100** to the imaging subsystem **117.**

In an alternative embodiment, the imaging subsystem **117** comprises at least one dynamically cooled camera or detection component, used with or without transparent thermal shielding.

The controller assembly **112** is further adapted to consolidate the images into data, actions, and parameters (e.g., positions, forces) according to which the robotic system **120** is operated during a furnace tending process. Accordingly, once the learning process of automatization program is completed, the robotic system **120** is adapted to be able to respond automatically to furnace conditions with appropriate actions based on live detections performed by the imaging subsystem **117** alone or in combination with data provided by other sensor(s).

It is worth mentioning that even though the above-described embodiments involve a movable stationary robotic system that, once set up, is adapted to perform the whole furnace tending process without being required to be moved, the present document contemplates other embodiments of robotic systems wherein, for example
- an AMR or AGV may be maintained under the robotic system, in communication with the robotic system, and adapted to move the robotic system during the furnace tending process when the automatization program requests such displacement;
- the robotic system remaining mounted on a wagon mounted on rails, with the wagon and the robotic system being able to move during the furnace tending process when the automatization program requests such displacement;
- the robotic system being mounted on a vehicle and able to move autonomously;
- the robotic system being mounted to a human-operated vehicle;
- the robotic system being movable using a human-operated vehicle; and
- the robotic system being mounted on wheels, reels or other ground contacting components allowing under robot-power or external power to move in front of the furnace during the furnace tending process.

Accordingly, the present description contemplates both stationary and mobile robotic systems, with the robotic systems being either autonomous or requiring external power to move; and methods of performing a furnace tending process using that robotic system, regardless of the robotic system remaining stationary throughout the furnace tending process or being moved during the furnace tending process.

The present contemplates robotic systems being powered though a power cable; or preferably robotic systems comprising battery cells permitting to the robotic system to be autonomous in relation with power during furnace tending processes.

It is also worth mentioning that the embodiments of robotic systems preferably comprise safety laser scanners, not depicted, scanning the vicinity, aka a danger zone, surrounding the robotic system for presence and movement, particularly human presence. The laser scanners are connected to the controller assembly itself programmed, for safety reasons, to stop any movement upon detection of human presence, thereby preventing the robotic system from hitting someone.

While preferred embodiments have been described above and illustrated in the accompanying drawings, it will be evident to those skilled in the art that modifications may be made without departing from this disclosure. Such modifications are considered as possible variants comprised in the scope of the disclosure.

## Claims

1. A robotic system (120) comprising:
a self-standing platform (140) movable between stations;
an articulated arm assembly rotatably mounted to the platform (140) around a first axis (210), the articulated arm assembly comprising at least one joint flexible through a second axis (215), and a third axis (220) farther to the first axis (210) than the joint, with the first axis (210) and the second axis (215) being parallel to each other;
a tool driving assembly (180) rotatably mounted to the articulated arm assembly about the third axis (220);
powering assembly (280) fixedly mounted to the articulated arm assembly, whereby the powering assembly (280) is rotatable with the articulated arm assembly about the first axis (210);
driving assemblies (183) (181) for driving a first movement of the articulated arm assembly relative to the first axis (210), driving a second movement of the articulated arm assembly relative to the second axis (215), driving a third movement of the tool (194) driving assembly (180) relative to the third axis (220) and driving the tool driving assembly (180);
wherein driving assemblies (183) (181) are connected to the powering assembly (280).

2. A robotic system (120) of claim 1, wherein the powering assembly (280) comprises a hydraulic powering pump.

3. A robotic system (120) of claim 1, wherein the articulated arm assembly is a SCARA arm assembly (160) comprising arms (170) (176) rotabably mounted to each other via a slew bearing (172).

4. A robotic system (120) of claim 3, wherein the SCARA arm assembly (160) comprises a passageway (290) extending through the arms (170) (176) and the slew bearing (172).

5. A robotic system (120) of claim 4, further comprising a power artery (300) extending through the passageway (290), the power artery (300) comprising a means for transmitting hydraulic power, a command cable (318) and an electric power cable (319), wherein the power artery (300) is connected to at least one of the driving assemblies (183) (181).

6. A robotic system (120) of claim 1, wherein the tool driving assembly (180) is rotatably mounted to the articulated arm assembly, the tool driving assembly (180) driving a tool (194) according to at least two degrees of freedom.

7. A robotic system (120) of claim 1, wherein the self-standing platform (140) comprises extendable legs (142), monitoring components designed to monitor stability of the platform (140), and driving components connected to the legs (142) to controllably adapt extension of the legs (142) to maintain stability of the platform (140).

8. A robotic system (120) of claim 1, wherein at least one of the driving assemblies (183) (181) comprises a control valve (352) (332), fed with hydraulic power, that is adapted to receive a target position command, a hydraulic actuator (334) connected to the control valve (352) (332), and a sensor (336) designed to transmit a position signal changing with operation of the actuator (334) to the control valve (352) (332),
wherein the control valve (352) (332) is adapted compare the target position command with the position signal, and to transmit hydraulic power to the hydraulic actuator (334) accordingly.

9. A robotic system (120) of claim 2, wherein the hydraulic powering pump consists in a variable displacement pump (282), the robotic system (120) further comprising a kidney loop, and a fix displacement pump operating in relation with the kidney loop.

10. A robotic system (120) of claim 9, wherein the powering assembly (280) comprises a fan (284) adapted to cool down fluid circulating in the kidney loop.

11. A robotic system (120) of claim 1, wherein the powering assembly (280) comprises battery cells (167).

12. A robotic system (120) of claim 1, wherein the powering assembly (280) is mounted to the articulated arm assembly distant to the third axis (220), whereby the powering assembly (280) at least partially balancing dead load generated by the tool driving assembly (180).

13. A robotic system (120) of claim 1, wherein at least one of:
the articulated arm assembly is adapted to flex over at least 270 degrees; and
the articulated arm assembly is adapted to rotate relative to the platform (140) over at least 270 degrees.

14. A robotic system (120) of claim 3, further comprising a controllable one-flow valve (358) connected to a hydraulic actuator (334), wherein the controllable one-flow valve (358) operates as a hydraulic brake for one of the driving assemblies (183) (181).

15. A robotic system (120) of claim 3, further comprising a controller assembly (112) and an imaging subsystem (117) comprising an image capture component (400), wherein the robotic system (120) comprises an automation program adapted for autonomously operating based on at least an image captured by the imaging subsystem (117) and the automation program.

## Patentansprüche

1. Robotersystem (120) umfassend:
eine eigenständige Plattform (140), die zwischen Stationen bewegt werden kann;
eine artikulierte Armbaugruppe, die auf der Plattform (140) um eine erste Achse (210) rotierbar montiert ist, wobei die artikulierte Armbaugruppe mindestens ein flexibles Gelenk durch eine zweite Achse (215) aufweist, und eine dritte Achse (220) weiter zur ersten Achse (210) hin als zum Gelenk, wobei die erste Achse (210) und die zweite Achse (215) parallel zueinander liegen;
eine Werkzeugantriebsbaugruppe (180), die auf der artikulierten Armbaugruppe um die dritte Achse (220) rotierbar montiert ist;
Energieversorgungsbaugruppe (280), die auf der artikulierten Armbaugruppe fest montiert ist, wodurch die Energieversorgungsbaugruppe (280) mit der artikulierten Armbaugruppe um die erste Achse (210) rotierbar ist;
Antriebsbaugruppen (183) (181) zum Antreiben einer ersten Bewegung der artikulierten Armbaugruppe relativ zur ersten Achse (210), Antreiben einer zweiten Bewegung der artikulierten Armbaugruppe relativ zur zweiten Achse (215), Antreiben einer dritten Bewegung der Werkzeugantriebsbaugruppe (180) des Werkzeugs (194) relativ zur dritten Achse (220) und Antreiben der Werkzeugantriebsbaugruppe (180);
wobei Antriebsbaugruppen (183) (181) mit der Energieversorgungsbaugruppe (280) verbunden sind.

2. Robotersystem (120) nach Anspruch 1, wobei die Energieversorgungsbaugruppe (280) eine hydraulische Antriebspumpe umfasst.

3. Robotersystem (120) nach Anspruch 1, wobei die artikulierte Armbaugruppe eine SCARA-Armbaugruppe (160) ist, die Arme (170) (176) umfasst, die über einen Drehkranz (172) rotierbar aneinander montiert sind.

4. Robotersystem (120) nach Anspruch 3, wobei die SCARA-Armbaugruppe (160) einen Durchgang (290) umfasst, der sich durch die Arme (170) (176) und den Drehkranz (172) erstreckt.

5. Robotersystem (120) nach Anspruch 4, ferner umfassend eine Versorgungsarterie (300), die sich durch den Durchgang (290) erstreckt, wobei die Versorgungsarterie (300) Mittel zum Übertragen von hydraulischer Leistung, ein Befehlskabel (318) und ein elektrisches Versorgungskabel (319) umfasst, wobei die Versorgungsarterie (300) mit mindestens einer der Antriebsbaugruppen (183) (181) verbunden ist.

6. Robotersystem (120) nach Anspruch 1, wobei die Werkzeugantriebsbaugruppe (180) rotierbar auf der artikulierten Armbaugruppe montiert ist, wobei die Werkzeugantriebsbaugruppe (180) ein Werkzeug (194) gemäß mindestens zwei Freiheitsgraden antreibt.

7. Robotersystem (120) nach Anspruch 1, wobei die eigenständige Plattform (140) ausziehbare Beine (142), zum Überwachen der Stabilität der Plattform (140) ausgelegte Überwachungskomponenten und mit den Beinen (142) verbundene Antriebskomponenten zum steuerbaren Anpassen der Auszuglängen der Beine (142) zum Beibehalten der Stabilität der Plattform (140) umfasst.

8. Robotersystem (120) nach Anspruch 1, wobei mindestens eine der Antriebsbaugruppen (183) (181) ein mit hydraulischer Leistung versorgtes Steuerventil (352) (332), das zum Empfangen eines Zielpositionsbefehls angepasst ist, einen hydraulischen Aktuator (334) verbunden mit dem Steuerventil (352) (332) und einen Sensor (336) ausgelegt zum Übertragen eines sich mit dem Betrieb des Aktuators (334) änderndes Positionssignals an das Steuerventil (352) (332) umfasst, wobei das Steuerventil (352) (332) zum Vergleichen des Zielpositionsbefehls mit dem Positionssignal und dementsprechend zum Übertragen von hydraulischer Leistung an den hydraulischen Aktuator (334) angepasst ist.

9. Robotersystem (120) nach Anspruch 2, wobei die hydraulische Antriebspumpe aus einer variablen Verdrängerpumpe (282) besteht, wobei das Robotersystem (120) ferner ein Nebenstromsystem und eine feste Verdrängerpumpe, die im Zusammenwirken mit dem Nebenstromsystem arbeitet, umfasst.

10. Robotersystem (120) nach Anspruch 9, wobei die Energieversorgungsbaugruppe (280) einen Ventilator (284) umfasst, der zum Herunterkühlen von Flüssigkeit, die im Nebenstromsystem zirkuliert, angepasst ist.

11. Robotersystem (120) nach Anspruch 1, wobei die Energieversorgungsbaugruppe (280) Akkuzellen (167) umfasst.

12. Robotersystem (120) nach Anspruch 1, wobei die Energieversorgungsbaugruppe (280) auf der artikulierten Armbaugruppe mit Abstand zur dritten Achse (220) montiert ist, wodurch die Energieversorgungsbaugruppe (280) zumindest teilweise tote Last, die von der Werkzeugantriebsbaugruppe (180) erzeugt wird, ausgleicht.

13. Robotersystem (120) nach Anspruch 1, wobei mindestens eines der Folgenden zutrifft:
die artikulierte Armbaugruppe ist angepasst, über mindestens 270 Grad gebeugt zu werden; und
die artikulierte Armbaugruppe ist angepasst, relativ zur Plattform (140) über mindestens 270 Grad zu rotieren.

14. Robotersystem (120) nach Anspruch 3, ferner umfassend ein steuerbares Einwegventil (358) verbunden mit einem hydraulischen Aktuator (334), wobei das steuerbare Einwegventil (358) als eine hydraulische Bremse für eine der Antriebsbaugruppen (183) (181) arbeitet.

15. Robotersystem (120) nach Anspruch 3, ferner umfassend eine Steuerungsbaugruppe (112) und ein Abbildungssubsystem (117), das eine Bilderfassungskomponente (400) umfasst, wobei das Robotersystem (120) ein Automationsprogramm umfasst, das für autonomen Betrieb auf der Basis von mindestens einem Bild, das vom Abbildungssubsystem (117) erfasst wird, und dem Automationsprogramm angepasst ist.

## Revendications

1. Système robotique (120), comprenant :
une plateforme autoportante (140) mobile entre des postes ;
un ensemble bras articulé monté rotatif sur la plateforme (140) autour d'un premier axe (210), l'ensemble bras articulé comprenant au moins une articulation flexible passant par un deuxième axe (215) et un troisième axe (220) plus éloigné du premier axe (210) que l'articulation, le premier axe (210) et le deuxième axe (215) étant parallèles entre eux ;
un ensemble d'entraînement d'outil (180) monté rotatif sur l'ensemble bras articulé autour du troisième axe (220) ;
un ensemble d'alimentation (280) monté fixe sur l'ensemble bras articulé, ce par quoi l'ensemble d'alimentation (280) est rotatif avec l'ensemble bras articulé autour du premier axe (210) ;
des ensembles d'entraînement (183) (181) pour entraîner un premier mouvement de l'ensemble bras articulé par rapport au premier axe (210), entraîner un deuxième mouvement de l'ensemble bras articulé par rapport au deuxième axe (215), entraîner un troisième mouvement de l'ensemble d'entraînement d'outil (180) de l'outil (194) par rapport au troisième axe (220) et entraîner l'ensemble d'entraînement d'outil (180) ;
les ensembles d'entraînement (183) (181) étant reliés à l'ensemble d'alimentation (280).

2. Système robotique (120) selon la revendication 1, dans lequel l'ensemble d'alimentation (280) comprend une pompe d'alimentation hydraulique.

3. Système robotique (120) selon la revendication 1, dans lequel l'ensemble bras articulé est un ensemble bras SCARA (160) comprenant des bras (170) (176) montés rotatifs l'un sur l'autre par l'intermédiaire d'un palier d'orientation (172).

4. Système robotique (120) selon la revendication 3, dans lequel l'ensemble bras SCARA (160) comprend un passage (290) s'étendant dans les bras (170) (176) et le palier d'orientation (172).

5. Système robotique (120) selon la revendication 4, comprenant en outre une conduite d'alimentation (300) s'étendant dans le passage (290), la conduite d'alimentation (300) comprenant un moyen de transmission d'énergie hydraulique, un câble de commande (318) et un câble d'énergie électrique (319), la conduite d'alimentation (300) étant reliée à au moins un des ensembles d'entraînement (183) (181).

6. Système robotique (120) selon la revendication 1, dans lequel l'ensemble d'entraînement d'outil (180) est monté rotatif sur l'ensemble bras articulé, l'ensemble d'entraînement d'outil (180) entraînant un outil (194) selon au moins deux degrés de liberté.

7. Système robotique (120) selon la revendication 1, dans lequel la plateforme autoportante (140) comprend des pieds extensibles (142), des composants de surveillance conçus pour surveiller la stabilité de la plateforme (140) et des composants d'entraînement reliés aux pieds (142) pour adapter par commande l'extension des pieds (142) afin de maintenir la stabilité de la plateforme (140).

8. Système robotique (120) selon la revendication 1, dans lequel au moins un des ensembles d'entraînement (183) (181) comprend une vanne de commande (352) (332), alimentée en énergie hydraulique, qui est conçue pour recevoir une commande de position cible, un actionneur hydraulique (334) relié à la vanne de commande (352) (332), et un capteur (336) conçu pour transmettre à la vanne de commande (352) (332) un signal de position qui varie avec le fonctionnement de l'actionneur (334),
la vanne de commande (352) (332) étant conçue pour comparer la commande de position cible au signal de position et pour transmettre l'énergie hydraulique à l'actionneur hydraulique (334) en conséquence.

9. Système robotique (120) selon la revendication 2, dans lequel la pompe d'alimentation hydraulique est une pompe à cylindrée variable (282), le système robotique (120) comprenant en outre une boucle rénale et une pompe à cylindrée fixe fonctionnant en relation avec la boucle rénale.

10. Système robotique (120) selon la revendication 9, dans lequel l'ensemble d'alimentation (280) comprend un ventilateur (284) conçu pour refroidir un fluide circulant dans la boucle rénale.

11. Système robotique (120) selon la revendication 1, dans lequel l'ensemble d'alimentation (280) comprend des éléments de batterie (167).

12. Système robotique (120) selon la revendication 1, dans lequel l'ensemble d'alimentation (280) est monté sur l'ensemble bras articulé à distance du troisième axe (220), ce par quoi l'ensemble d'alimentation (280) équilibre au moins en partie la charge morte générée par l'ensemble d'entraînement d'outil (180).

13. Système robotique (120) selon la revendication 1, dans lequel :
l'ensemble bras articulé est conçu pour fléchir sur au moins 270 degrés ; et/ou
l'ensemble bras articulé est conçu pour tourner par rapport à la plateforme (140) sur au moins 270 degrés.

14. Système robotique (120) selon la revendication 3, comprenant en outre une vanne unidirectionnelle commandable (358) reliée à un actionneur hydraulique (334), la vanne unidirectionnelle commandable (358) fonctionnant comme un frein hydraulique pour un des ensembles d'entraînement (183) (181).

15. Système robotique (120) selon la revendication 3, comprenant en outre un ensemble de commande (112) et un sous-système d'imagerie (117) comprenant un composant de capture d'image (400), le système robotique (120) comprenant un programme d'automatisation conçu pour fonctionner de manière autonome sur la base d'au moins une image capturée par le sous-système d'imagerie (117) et le programme d'automatisation.
